(19) Europäisches Patentamt / European Patent Office / Office européen des brevets

(11) **EP 4 455 948 B1**

(12) **EUROPÄISCHE PATENTSCHRIFT**

(45) Veröffentlichungstag und Bekanntmachung des Hinweises auf die Patenterteilung:
**14.01.2026   Patentblatt 2026/03**

(51) Internationale Patentklassifikation (IPC):
**G06N 3/098** (2023.01)      G06N 3/082 (2023.01)
G06N 3/09 (2023.01)

(21) Anmeldenummer: **23169732.7**

(22) Anmeldetag: **25.04.2023**

(52) Gemeinsame Patentklassifikation (CPC):
**G06N 3/098;** G06N 3/082; G06N 3/09

(54) **COMPUTER-IMPLEMENTIERTES VERFAHREN UND SYSTEM ZUM BETRIEB EINES TECHNISCHEN GERÄTS**

COMPUTER-IMPLEMENTED METHOD AND SYSTEM FOR OPERATING A TECHNICAL DEVICE

PROCÉDÉ MIS EN UVRE PAR ORDINATEUR ET SYSTÈME DE FONCTIONNEMENT D'UN APPAREIL TECHNIQUE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(43) Veröffentlichungstag der Anmeldung:
**30.10.2024   Patentblatt 2024/44**

(73) Patentinhaber: **Siemens Aktiengesellschaft**
**80333 München (DE)**

(72) Erfinder:
• **REZAPOUR LAKANI, Safoura**
**1210 Wien (AT)**
• **HIESSL, Thomas**
**1050 Wien (AT)**
• **EDER, Jana**
**1180 Wien (AT)**
• **SCHALL, Daniel**
**2020 Hollabrunn (AT)**

(74) Vertreter: **Siemens Patent Attorneys**
**Postfach 22 16 34**
**80506 München (DE)**

(56) Entgegenhaltungen:
• **JED MILLS ET AL: "Multi-Task Federated Learning for Personalised Deep Neural Networks in Edge Computing", ARXIV.ORG, CORNELL UNIVERSITY LIBRARY, 201 OLIN LIBRARY CORNELL UNIVERSITY ITHACA, NY 14853, 16 April 2021 (2021-04-16), XP081924379**

**Beschreibung**

*Unabhängig vom grammatikalischen Geschlecht eines bestimmten Begriffes sind Personen mit männlicher, weiblicher oder anderer Geschlechteridentität mit umfasst.*

Die Erfindung betrifft ein computer-implementiertes Verfahren und ein System zum Betrieb eines technischen Geräts mit einem Modell für den Betrieb des technischen Geräts auf Basis künstlicher Intelligenz durch einen Klienten eines Klienten-Server-Systems mit einem Server, welcher ein globales Modell auf Basis föderierten Lernens bereitstellt, und zumindest zwei Klienten, wobei jeder Klient einen Prozessor und einen Speicher aufweist, und jeder Klient ein Klienten-Modell zum Betrieb eines verbundenen technischen Geräts speichert.

Die Erfindung betrifft ferner ein Computer-Programmprodukt.

Maschinelles Lernen, kurz "ML" ist in industriellen Anwendungen, wie der Qualitätsprüfung oder der Erkennung von Anomalien weit verbreitet, insbesondere bei der visuellen Qualitätsprüfung durch elektrooptische optische Sensoren oder Bildsensoren.

Es gibt im industriellen Umfeld Szenarien, bei welchen mehrere Produktionsstandorte möglicherweise dieselbe ML-Anwendung erfordern, wie beispielsweise bei der Erkennung von Anomalien ähnlicher Produkte.

Dabei kann das Trainieren eines einzelnen Modells auf der Grundlage von gesammelten Daten mehrerer Produkte aus unterschiedlichen Produktionsanlagen beziehungsweise Inspektionsanlagen insgesamt zu einem verbesserten ML-Modell führen.

Die Weitergabe von Daten ist jedoch aufgrund von Datenschutzbedenken oder auch der Datenmenge möglicherweise nicht möglich. Daher kann ein sogenanntes "föderiertes Lernen" (engl. "federated learning", kurz FL) verwendet werden, um Wissen zwischen mehreren Klienten zu aggregieren und ein Modell zwischen ihnen zu trainieren, ohne Daten auszutauschen.

Die Datenverteilung zwischen den Kunden kann unterschiedlich sein, das heißt die an jeder Produktionslinie gesammelten Daten können unterschiedlich sein.

Daher kann jeder Klient Daten enthalten, die nicht identisch und unabhängig (Nicht-IID) verteilt sind.

In weiterer Folge kann das aggregierte FL-Modell möglicherweise nicht allen Clients vorteilhaft zugutekommen.

Einige Klienten können besser also lernen, wenn sie ihre eigenen Daten verwenden.

Im Stand der Technik wird Kohorten-basiertes föderiertes Lernen angewandt, bei dem der Server ähnliche Klienten entsprechend ihrer Datenverteilung in Kohorten gruppiert. Anschließend wird für jede Kohorte ein FL-Modell trainiert. Die Kohorten werden unter Berücksichtigung der Privatsphäre und zusätzlicher Rechenkomplexität und Kommunikationskosten für den Aufbau von Kohorten genützt, bevor mit dem föderierten Lernen begonnen wird.

Im Stand der Technik wird auch personalisiertes föderiertes Lernen angewandt, welches jedem Klienten ermöglicht, ein personalisiertes Modell anstelle eines gemeinsamen globalen Modells zu verwenden. Die Klienten können vom globalen Modell profitieren und es besteht gleichzeitig die Möglichkeit, eigenen Modelle beizubehalten und die Kommunikation gering zu halten oder zu senken.

Die Veröffentlichung JED MILLS ET AL: "Multi-Task Federated Learning for Personalised Deep Neural Networks in Edge Computing", ARXIV.ORG, CORNELL UNIVERSITY LIBRARY, 201 OLIN LIBRARY CORNELL UNIVERSITY ITHACA, NY 14853, 16. April 2021 (2021-04-16), zeigt ein Verfahren mit "Multi-Task-Learning", was auf allgemeine iterative FL-Algorithmen aufsetzt und es Nutzern ermöglicht, personalisierte Modelle unter verbessertem Datenschutz zu erlernen.

Es ist daher Aufgabe der Erfindung eine Lösung bereitzustellen, durch welche ein individuelles Lernen im Kontext eines föderierten Lernens verbessert wird, und jeder Klient von FL und Wissensaustausch profitiert.

Die erfindungsgemäße Aufgabe wird auch durch ein Computer-Programm-Produkt mit darin gespeicherten maschinenlesbaren Anweisungen gelöst, die, wenn sie von einer Verarbeitungseinheit ausgeführt werden, diese veranlassen, das erfindungsgemäße Verfahren auszuführen.

Die Aufgabe wird durch ein Verfahren eingangs genannter Art gelöst, wobei folgende Schritte ausgeführt werden:

　　a) Bereitstellen des globalen Modells auf Basis föderierten Lernens an zumindest einen Klienten, durch den Server,
　　b) Prüfen durch den zumindest einen Klienten, ob im Speicher zumindest ein sensitiver Modell-Parameter gespeichert ist, welcher nicht vom globalen Modell umfasst ist, und falls ja, Aggregieren des bereitgestellten globalen Modells mit dem zumindest einen sensitiven Modell-Parameter und Aktualisieren als Klienten-Modell, und falls nein, Aktualisieren des Klienten-Modells mit dem bereitgestellten globalen Modell,
　　c) Bereitstellen zumindest eines Referenz-Datensatzes für den Betrieb des technischen Geräts,
　　d) Berechnen einer ersten Genauigkeit des Klienten-Modells mithilfe des zumindest einen Referenz-Datensatzes,
　　e) Bestimmen der Gradienten der Modell-Parameter des Klienten-Modells und Bestimmen zumindest eines ausgewählten Gradienten der Modell-Parameter des Klienten-Modells, welcher außerhalb eines vordefinierten Wertebereichs liegt,
　　f) Entfernen des zumindest einen Modell-Parameters, welcher zu dem zumindest einen ausgewählten Gradienten zugehörig ist, aus dem Klienten-Modell,

g) Berechnen einer zweiten Genauigkeit des Klienten-Modells aus dem vorhergehenden Schritt mithilfe des zumindest einen Referenz-Datensatzes,

h) Prüfen, ob sich die zweite Genauigkeit unter der ersten Genauigkeit liegt, falls ja, Festlegen des zumindest einen Modell-Parameters, welcher zu dem zumindest einen ausgewählten Gradienten zugehörig ist, als zumindest ein sensitiver Parameter und speichern im Speicher, und Bereitstellen des Klienten-Modells an den Server,

i) Aktualisieren des globalen Modells mithilfe des bereitgestellten Klienten-Modells durch den Server,

j) Betreiben des technischen Geräts durch den Klienten mit dem Klienten-Modell und dem zumindest einen sensitiven Parameter aus dem Speicher.

Dadurch ist es möglich, individuelle Modell-Parameter lokal bei einem Klienten zu berücksichtigen, ohne dass das globale Modell diesen Modell-Parameter anderen Klienten bereitstellt.

Jeder Klient kann von der selektiven Wissensvermittlung profitieren. Mit anderen Worten findet kein negativer Wissenstransfer mehr statt.

Ferner ist der erfindungsgemäße Ansatz energieeffizienter, da nur unempfindliche Parameter an den Server gesendet werden, und nicht alle Parameter, wodurch Kommunikationskosten gespart werden.

Die Wahrung der Privatsphäre wird erhöht, da Parameter, die für lokale Datenverteilungen spezifisch sind, nicht an den Server zurückgegeben werden.

Der vorgeschlagene Algorithmus funktioniert für verschiedene Lernszenarien wie Klassifizierung, Regression oder ähnliches. In einer Weiterbildung der Erfindung ist es vorgesehen, dass die zweite Genauigkeit im Speicher des jeweiligen Klienten gespeichert wird.

Dadurch ist es möglich, den Verlauf der ersten und zweiten Genauigkeit über mehrere Durchläufe der Verfahrensschritte zu verfolgen und daraus auf Kombinationen von Modell-Parametern zu schließen.

In einer Weiterbildung der Erfindung ist es vorgesehen, dass der vordefinierten Wertebereich zumindest durch die Normalverteilung von mehreren Gradienten in mehreren Durchläufen des Verfahrens festgelegt ist.

Dadurch ist es möglich, den Verlauf der ersten und zweiten Genauigkeit über mehrere Durchläufe der Verfahrensschritte zu verfolgen und dynamisch auf Änderungen zu reagieren.

Die erfindungsgemäße Aufgabe wird auch durch ein Klienten-Server-System zum Betreiben eines technischen Geräts mit einem Modell auf Basis künstlicher Intelligenz durch einen Klienten eines Klienten-Server-Systems gelöst, mit einem Server, welcher ein globales Modell auf Basis föderierten Lernens bereitstellt, und zumindest zwei Klienten, wobei jeder Klient einen Prozessor und einen Speicher aufweist, und jeder Klient ein Klienten-Modell zum Betrieb eines verbundenen technischen Geräts speichert, welches Klienten-Modell sensitive Modell-Parameter und nicht-sensitive Modell-Parameter aufweist, wobei das System dazu eingerichtet ist, das erfindungsgemäße Verfahren auszuführen.

Die erfindungsgemäße Aufgabe wird auch durch ein Computer-Programm-Produkt mit darin gespeicherten maschinenlesbaren Anweisungen gelöst, die, wenn sie von einem Klienten-Server-System ausgeführt werden, wobei das Klienten-Server-System einen Server und zumindest zwei Klienten umfasst, und wobei jeder Klient einen Prozessor und einen Speicher aufweist, das Kienten-Server-System veranlasst, das erfindungsgemäße Verfahren auszuführen.

Die Erfindung wird nachfolgend anhand eines in den beigeschlossenen Zeichnungen dargestellten Ausführungsbeispiels näher erläutert. In den Zeichnungen zeigt:

Fig. 1 ein Beispiel für das Prinzip eine visuellen Qualitäts-Inspektionssystems mit einem Modell auf Basis künstlicher Intelligenz,

Fig. 2 Ein Beispiel für ein erfindungsgemäßes System zur visuellen Qualitäts-Inspektion,

Fig. 3 ein Beispiel für ein Ablaufdiagramm des erfindungsgemäßen Verfahrens.

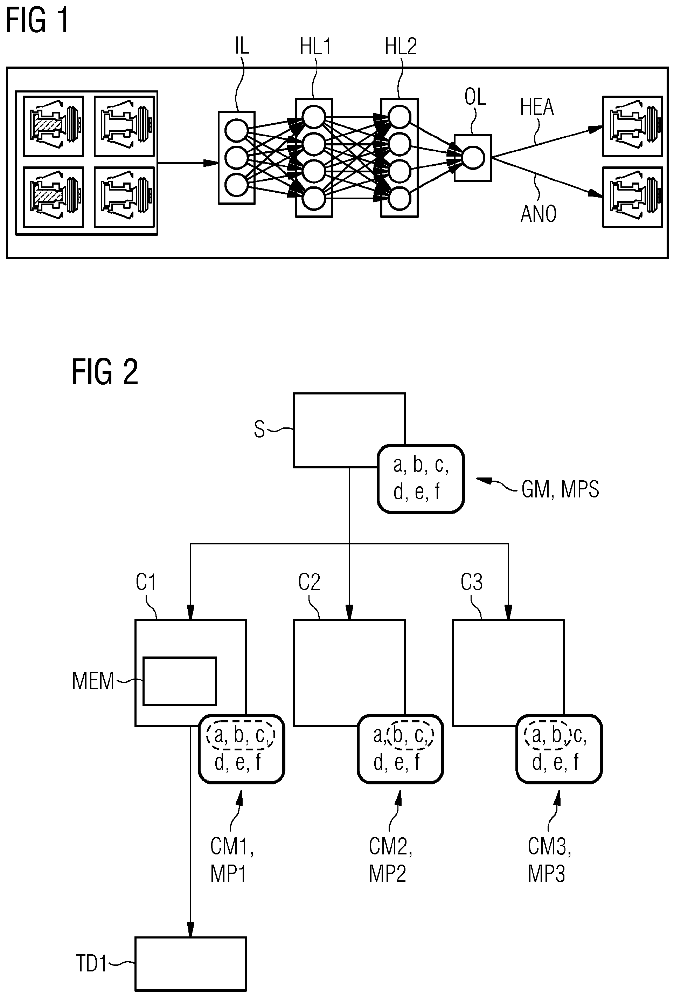

**Fig. 1** zeigt ein Beispiel für das Prinzip eine visuellen Qualitäts-Inspektionssystems mit einem Modell auf Basis künstlicher Intelligenz in Form eines Auto-Encoders.

Eine Aufnahme eines optischen Bildsensors wird drei Eingangs-Knoten in einer Eingangs-Lage IL (engl. "input layer") zugeführt.

Anschließend erfolgt eine Analyse durch mehrere, innere, unsichtbare Knoten in Zwischen-Lagen HL1, HL2 (engl. "hidden layer).

Ein Ausgangs-Knoten in einer Ausgangs-Lage OL (engl. "output layer") liefert eine Anomalie-Matrix, welche entweder einen gesunder Status HEA, oder eine erkannte Anomalie ANO liefert. Unter der visuellen Qualitäts-Inspektion kann auch der Betrieb eines technischen Geräts verstanden werden, wenn eine Rückkoppelschleife zur Produktionsmaschine mithilfe der ermittelten Qualitäts-Informationen angewandt wird, was im Weiteren nicht näher ausgeführt ist.

Alternativ kann der Betrieb eines technischen Geräts mit einem Modell erfolgen.

**Fig. 2** zeigt ein Beispiel für ein erfindungsgemäßes System zur visuellen Qualitäts-Inspektion, umfassend einen Server S und drei Klienten C1-C3, unter welchen ML-Modelle föderiert werden.

Allgemein handelt es sich um ein Klienten-Server-System zum Betreiben eines technischen Geräts TD mit einem Modell auf Basis künstlicher Intelligenz durch einen Klienten C1 eines Klienten-Server-Systems.

Der zumindest eine Referenz-Datensatz für den Betrieb des lokal mit dem Klienten C1 verbundenen technischen Geräts TD1 kann beispielsweise ein Sensordatensatz eines Kamerasensors für einen zulässigen Betriebsmodus oder einen Fehlerfall sein, und sollte so gewählt werden, dass die spezifischen Eigenschaften des lokal verbundenen Geräts TD1 abgebildet werden, um einen oder mehrere sensitiven Modell-Parameter aus dem globalen Modell ableiten zu können. Ebenso ist ein Datensatz zur Steuerung eines allgemeinen verbundenen technischen Geräts sinnvoll.

Für das Anwendungsbeispiel einer visuellen Qualitäts-Inspektion für ein durch eine Produktionsanlage erzeugtes Produkt kann sowohl der Sensor-Datensatz, welcher bei der optischen Erfassung des Produkts durch einen entsprechenden Sensor erzeugt wurde, als auch ein Feedback-Steuerdatensatz zur entsprechend der bestimmten Qualitäts-Parameter angepassten Steuerung der Produktionsanlage des Produkts angewendet werden.

Dadurch kann eine automatische Optimierung der Produktion erreicht werden.

Das System umfasst den Server S mit einem Prozessor und einem Server-Speicher, wobei der Server S ein globales Modell GM auf Basis föderierten Lernens bereitstellt.

Unter föderiertem Lernen versteht man die Aggregation von einzelnen Modellen individueller Klienten durch einen zentralen Server, welcher wiederum einzelnen Klienten aktualisierte Modelle zur Verfügung stellt, beispielsweise bei Hinzufügen neuer Geräte mit neuen Klienten in ein System.

Jeder Klient C1-C3, welcher am föderierten Lernen teilnimmt, weist einen Prozessor, also eine Rechenvorrichtung, und einen Speicher MEM auf.

Jeder Klient C1-C3 speichert ein Klienten-Modell CM1-CM3 zum Betrieb eines eigenen, jeweilig verbundenen technischen Geräts, wie Klient C1 mit dem Gerät TD1 verbunden ist.

Das Qualitäts-Inspektionssystem erfasst mithilfe einer Kamera Sensordaten von Produkten, welche durch ein Produktionssystem zuvor produziert wurden.

Das System wendet auf erfasste Sensordaten ein Modell mit mehreren Parametern an, um Anomalien in den Sensordaten zu erkennen.

Nachfolgend kann ein technisches Gerät, wie eine Produktionsmaschine, angesteuert werden, um Eigenschaften der Produktionsanlage zu verbessern.

Die Parameter der Klienten C1-C3 umfassen sensitive Parameter, welche von Eingangs-Parametern abhängen und während des Trainings des ML-Modells ermittelt werden.

Eine Optimierung des ML-Modells, insbesondere bei einem neuronalen Netzwerk, kann aufgrund des Gradienten der Modell-Parameter erfolgen.

$$\theta' := \theta - \alpha \, \nabla_\theta \, \mathcal{L}(f_\theta; \{X^{train}, Y^{train}\})$$

Dabei ist es Ziel, die sensitiven Parameter zu identifizieren und das föderierte Modell, jedoch ohne die sensitiven Parameter zu aktualisieren, um ein qualitative hochwertiges und allgemein gültiges FL-Modell zu erhalten, welches mit anderen Klienten geteilt wird.

Zusätzlich werden die lokalen Klienten-Modelle um sensitive Modell-Parameter ergänzt, um eine spezifische Anpassung der Klienten-Modelle zu erreichen.

In der Figur ist eine Menge an Modell-Parametern MPS mit Modell-Parameters a-f am Server S und für jeden Klienten C1-C3 eine jeweilige Menge an Modell-Parametern MP1-MP3 mit jeweiligen Modell-Parametern a-f gezeigt, welche individuelle sensitive und nicht-sensitive Parameter aufweisen.

Der Server S zeigt eine Menge an Modell-Parametern MPS mit Parametern a, b, c, d, e, f.

Der Klient C1 zeigt eine Menge an Modell-Parametern MP1 mit sensitiven Parametern a, b, c und nicht-sensitiven Parametern d, e, f.

Der Klient C2 zeigt eine Menge an Modell-Parametern MP2 mit sensitiven Parametern b, c und nicht-sensitiven Parametern a, d, e, f.

Der Klient C3 zeigt eine Menge an Modell-Parametern MP3 mit sensitiven Parametern a, b und nicht-sensitiven Parametern c, d, e, f.

Die Modell-Parameter MP1 vom Klienten C1 unterscheiden sich in ihren sensitiven und nicht-sensitiven Parametern MP1 von jenen der Klienten C2 beziehungsweise C3, obwohl alle Klienten C1-C3 und der Server S dieselben Modell-Parameter a-f aufweisen.

Die Bestimmung von sensitiven Parametern kann anhand einer Gradienten-Bestimmung der einzelnen Modell-Parameter MP1-MP3. Es können vorbestimmte Wertebereichen herangezogen werden, um einen sensitiven Parameter zu bestimmen. Mithilfe von Genauigkeitsbestimmung des Modells mit bereitgestellten Referenz-Daten kann festgestellt werden, ob es zu einer signifikanten Verschlechterung des Klienten-Modells gegenüber dem globalen Modell kommt, was ein Indiz für einen sensitiven Parameter spricht.

Optional kann neben einem statischen Schwellwert oder Wertebereich auch dynamisch ein Schwellwert oder Wertebereich definiert werden, beispielsweise durch den Zusammenhang

$$Schwellwert\_grad = \mu(\mathrm{G}_\Theta) + 2\,\sigma(\mathrm{G}_\Theta)$$

mit

$$G_\Theta = \{grad_\theta \; \forall \; \theta \in model\}$$

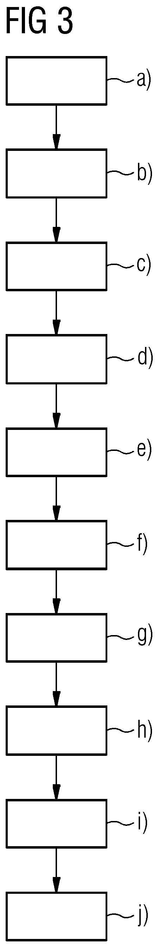

**Fig. 3** stellt ein Beispiel für ein Ablaufdiagramm des erfindungsgemäßen Verfahrens dar.

Das Verfahren dient zum Betrieb eines technischen Geräts TD1 mit einem Modell auf Basis künstlicher Intelligenz durch einen Klienten C1 eines Klienten-Server-Systems.

Ein Server S des Systems stellt ein globales Modell GM für den Betrieb des technischen Geräts TD) auf Basis föderierten Lernens bereit.

Das System weist zumindest zwei Klienten C1-C3 auf, wobei jeder Klient C1-C3 einen Prozessor und einen Speicher MEM auf.

Jeder Klient C1-C3 speichert ein jeweiliges Klienten-Modell CM1-CM3 zum Betrieb eines jeweilig verbundenen technischen Geräts.

Folgende Schritte werden dabei ausgeführt:

a) Bereitstellen des globalen Modells GM auf Basis föderierten Lernens an zumindest einen Klienten C1, durch den Server S,

b) Prüfen durch den zumindest einen Klienten C1-C3, ob im Speicher MEM zumindest ein sensitiver Modell-Parameter gespeichert ist, welcher nicht vom globalen Modell GM umfasst ist, und falls ja, Aggregieren des bereitgestellten globalen Modells GM mit dem zumindest einen sensitiven Modell-Parameter und Aktualisieren als Klienten-Modell CM1, und falls nein, Aktualisieren des Klienten-Modells CM1 mit dem bereitgestellten globalen Modell GM,

c) Bereitstellen zumindest eines Referenz-Datensatzes für den Betrieb des technischen Geräts TD1,

d) Berechnen einer ersten Genauigkeit des Klienten-Modells CM1 mithilfe des zumindest einen Referenz-Datensatzes,

e) Bestimmen der Gradienten der Modell-Parameter des Klienten-Modells CM1 und Bestimmen zumindest eines ausgewählten Gradienten der Modell-Parameter des Klienten-Modells CM1, welcher außerhalb eines vordefinierten Wertebereichs liegt,

f) Entfernen des zumindest einen Modell-Parameters, welcher zu dem zumindest einen ausgewählten Gradienten zugehörig ist, aus dem Klienten-Modell CM1,

g) Berechnen einer zweiten Genauigkeit des Klienten-Modells CM1 aus dem vorhergehenden Schritt mithilfe des zumindest einen Referenz-Datensatzes,

h) Prüfen, ob sich die zweite Genauigkeit unter der ersten Genauigkeit liegt, falls ja, Festlegen des zumindest einen Modell-Parameters, welcher zu dem zumindest einen ausgewählten Gradienten zugehörig ist, als zumindest ein sensitiver Parameter und speichern im Speicher MEM, und Bereitstellen des Klienten-Modells CM1 an den Server S,

i) Aktualisieren des globalen Modells mithilfe des bereitgestellten Klienten-Modells CM1 durch den Server S,

j) Betreiben des technischen Geräts TD1 durch den Klienten C1 mit dem Klienten-Modell CM1 und dem zumindest einen sensitiven Parameter aus dem Speicher MEM.

Die zweite Genauigkeit kann im Speicher MEM des jeweiligen Klienten C1-C3 gespeichert werden.

Der vordefinierten Wertebereich kann zumindest durch die Normalverteilung von mehreren Gradienten in mehreren Durchläufen des Verfahrens festgelegt sein.

Die gespeicherten sensitiven Modell-Parameter können vorzugsweise in einer Liste gespeichert werden.

Anfangs ist der Speicher für die sensitiven Modell-Parameter leer.

Sobald sich die Genauigkeit des Klienten-Modells verschlechtert, identifiziert das System sensitive Parameter gemäß den Gradienten der Modell-Parameter mithilfe eines entsprechenden Schwellwerts oder Wertebereichs für die Modell-Parameter.

Bei Überschreiten des vorbestimmten Schwellwerts oder bei Abliegen der Gradienten außerhalb des vorbestimmten Wertebereichs wird der entsprechende Modell-Parameter als sensitiver Parameter erkannt.

Für jeden Klienten C1-C3 können andere sensitive Parameter vorliegen, wie in Fig. 2 erkennbar.

Die Klienten C1-C3 senden nur nicht-sensitive Modell-Parameter an den Server S zur föderierten Modell-Bildung.

**Bezugszeichenliste:**

| | |
|---|---|
| ANO | Anomalie erkannt |
| C1-C3 | Klient |
| CM1-CM3 | Klienten-Modell |
| GM | globales Modell |
| HEA | gesunder Status (engl. "healthy") |
| HL1, HL2 | innere, unsichtbare Knoten (engl. "hidden layer) |
| IL | Eingangs-Knoten (engl. "input layer") |
| MEM | Speicher |
| MPS, MP1-MP3 | Modell-Parameter |
| OL | Ausgangs-Knoten (engl. "output layer") |
| S | Server |

**Patentansprüche**

1. Computer-implementiertes Verfahren zum Betrieb eines technischen Geräts (TD1) mit einem Modell auf Basis künstlicher Intelligenz durch einen Klienten (C1-C3) eines Klienten-Server-Systems mit einem Server (S), welcher ein globales Modell für den Betrieb des technischen Geräts (TD1) auf Basis föderierten Lernens bereitstellt, und zumindest zwei Klienten (C1-C3), wobei jeder Klient (C1-C3) einen Prozessor und einen Speicher (MEM) aufweist, und jeder Klient (C1-C3) ein Klienten-Modell (CM1-CM3) zum Betrieb eines verbundenen technischen Geräts (TD1) speichert, und folgende Schritte ausgeführt werden:

a) Bereitstellen des globalen Modells (GM) auf Basis föderierten Lernens an zumindest einen Klienten (C1), durch den Server (S),

b) Prüfen durch den zumindest einen Klienten (C1-C3), ob im Speicher (MEM) zumindest ein sensitiver Modell-Parameter gespeichert ist, welcher nicht vom globalen Modell (GM) umfasst ist, und falls ja, Aggregieren des bereitgestellten globalen Modells (GM) mit dem zumindest einen sensitiven Modell-Parameter und Aktualisieren als Klienten-Modell (CM1), und falls nein, Aktualisieren des Klienten-Modells (CM1) mit dem bereitgestellten globalen Modell (GM),

c) Bereitstellen zumindest eines Referenz-Datensatzes für den Betrieb des technischen Geräts (TD1),

d) Berechnen einer ersten Genauigkeit des Klienten-Modells (CM1) mithilfe des zumindest einen Referenz-Datensatzes,

e) Bestimmen der Gradienten der Modell-Parameter des Klienten-Modells (CM1) und Bestimmen zumindest eines ausgewählten Gradienten der Modell-Parameter des Klienten-Modells (CM1), welcher außerhalb eines vordefinierten Wertebereichs liegt,

f) Entfernen des zumindest einen Modell-Parameters, welcher zu dem zumindest einen ausgewählten Gradienten zugehörig ist, aus dem Klienten-Modell (CM1),

g) Berechnen einer zweiten Genauigkeit des Klienten-Modells (CM1) aus dem vorhergehenden Schritt mithilfe des zumindest einen Referenz-Datensatzes,

h) Prüfen, ob sich die zweite Genauigkeit unter der ersten Genauigkeit liegt, falls ja, Festlegen des zumindest einen Modell-Parameters, welcher zu dem zumindest einen ausgewählten Gradienten zugehörig ist, als zumindest ein sensitiver Parameter und speichern im Speicher (MEM), und Bereitstellen des Klienten-Modells (CM1) an den Server (S),

i) Aktualisieren des globalen Modells mithilfe des bereitgestellten Klienten-Modells (CM1) durch den Server (S),

j) Betreiben des technischen Geräts (TD1) durch den Klienten (C1) mit dem Klienten-Modell (CM1) und dem zumindest einen sensitiven Parameter aus dem Speicher (MEM).

2. Verfahren nach dem vorhergehenden Anspruch, wobei die zweite Genauigkeit im Speicher (MEM) des jeweiligen Klienten (C1-C3) gespeichert wird.

3. Verfahren nach einem der vorhergehenden Ansprüche, wobei der vordefinierten Wertebereich zumindest durch die Normalverteilung von mehreren Gradienten in mehreren Durchläufen des Verfahrens festgelegt ist.

4. Klienten-Server-System zum Betreiben eines technischen Geräts (TD) mit einem Modell auf Basis künstlicher Intelligenz durch einen Klienten (C1-C3) eines Klienten-Server-Systems mit einem Server (S), welcher ein globales Modell auf Basis föderierten Lernens bereitstellt, und zumindest zwei Klienten (C1-C3), wobei jeder Klient (C1-C3) einen Prozessor und einen Speicher (MEM) aufweist, und jeder Klient (C1-C3) ein Klienten-Modell (CM1-CM3) zum Betrieb eines verbundenen technischen Geräts (TD1) speichert, welches Klienten-Modell (CM1-CM3) sensitive Modell-Parameter und nicht-sensitive Modell-Parameter aufweist, wobei das System dazu eingerichtet ist, das Verfahren nach einem der vorhergehenden Ansprüche auszuführen.

5. Computer-Programm-Produkt mit darin gespeicherten maschinenlesbaren Anweisungen, die, wenn sie von einem Klienten-Server-System ausgeführt werden, wobei das Klienten-Server-System einen Server (S) und zumindest zwei Klienten (C1-C3) umfasst, und wobei jeder Klient einen Prozessor und einen Speicher (MEM) aufweist, das Klienten-Server-System veranlasst, das Verfahren nach einem der Ansprüche 1 bis 3 auszuführen.

**Claims**

1. Computer-implemented method for operating a technical device (TD1) using a model on the basis of artificial intelligence by a client (C1-C3) of a client-server system comprising a server (S), which provides a global model for operating the technical device (TD1) on the basis of federated learning, and at least two clients (C1-C3), wherein each client (C1-C3) has a processor and a memory (MEM), and each client (C1-C3) stores a client model (CM1-CM3) for operating a connected technical device (TD1), and the following steps are performed:

a) Providing the global model (GM) on the basis of federated learning to at least one client (C1) by the server (S),

b) checking by the at least one client (C1-C3) whether at least one sensitive model parameter which is not included in the global model (GM) is stored in the memory (MEM), and if yes, aggregating the provided global model (GM) with the at least one sensitive model parameter and updating said global model as a client model (CM1), and if no, updating the client model (CM1) with the provided global model (GM),

c) providing at least one reference dataset for operating the technical device (TD1),

d) calculating a first accuracy of the client model (CM1) with the aid of the at least one reference dataset,

e) determining the gradients of the model parameters of the client model (CM1) and determining at least one selected gradient of the model parameters of the client model (CM1) which lies outside of a predefined value range,

f) removing the at least one model parameter associated with the at least one selected gradient from the client model (CM1),

g) calculating a second accuracy of the client model (CM1) from the preceding step with the aid of the at least one reference dataset,

h) checking whether the second accuracy lies below the first accuracy, and if yes, specifying the at least one model parameter associated with the at least one selected gradient as at least one sensitive parameter and storing said sensitive parameter in the memory (MEM), and providing the client model (CM1) to the server (S),

i) updating the global model with the aid of the provided client model (CM1) by the server (S),

j) operating the technical device (TD1) by the client (C1) using the client model (CM1) and the at least one sensitive parameter from the memory (MEM).

2. Method according to the preceding claim, wherein the second accuracy is stored in the memory (MEM) of the respective client (C1-C3).

3. Method according to one of the preceding claims, wherein the predefined value range is specified at least by means of the normal distribution of multiple gradients in multiple passes through the method.

4. Client-server system for operating a technical device (TD) using a model on the basis of artificial intelligence by a client (C1-C3) of a client-server system comprising a server (S), which provides a global model on the basis of federated learning, and at least two clients (C1-C3), wherein each client (C1-C3) has a processor and a memory (MEM), and each client (C1-C3) stores a client model (CM1-CM3) for operating a connected technical device (TD1), which client model (CM1-CM3) comprises sensitive model parameters and non-sensitive model parameters, wherein the system is configured to perform the method according to one of the preceding claims.

5. Computer program product having machine-readable instructions stored therein which, when they are executed by a client-server system, wherein the client-server system comprises a server (S) and at least two clients (C1-C3), and wherein each client has a processor and a memory (MEM), cause the client-server system to perform the method according to one of claims 1 to 3.

**Revendications**

1. Procédé implémenté par ordinateur pour la mise en fonctionnement d'un dispositif technique (TD1) avec un modèle basé sur l'intelligence artificielle par un client (C1 à C3) d'un système client-serveur avec un serveur (S), lequel fournit un modèle global pour la mise en fonctionnement du dispositif technique (TD1) basé sur un apprentissage fédéré, et au moins deux clients (C1 à C3), dans lequel chaque client (C1 à C3) comprend un processeur et une mémoire (MEM), et chaque client (C1 à C3) stocke un modèle client (CM1 à CM3) pour la mise en fonctionnement d'un dispositif technique (TD1) connecté, et les étapes suivantes sont exécutées :

a) fourniture, par le serveur (S), du modèle global (GM) basé sur un apprentissage fédéré à au moins un client (C1),

b) vérification, par l'au moins un client (C1 à C3), que dans la mémoire (MEM) est stocké ou non au moins un paramètre de modèle sensible qui n'est pas inclus dans le modèle global (GM), et si c'est le cas, agrégation du modèle global (GM) fourni avec l'au moins un paramètre de modèle sensible et actualisation en tant que modèle client (CM1), et si ce n'est pas le cas, actualisation du modèle client (CM1) avec le modèle global (GM) fourni,

c) fourniture d'au moins un ensemble de données de référence pour la mise en fonctionnement du dispositif technique (TD1),

d) calcul d'une première précision du modèle client (CM1) à l'aide de l'au moins un ensemble de données de référence,

e) détermination des gradients des paramètres de modèle du modèle client (CM1) et détermination d'au moins un gradient sélectionné des paramètres de modèle du modèle client (CM1) qui se situe en dehors d'une gamme de valeurs prédéfinie,

f) retrait, du modèle client (CM1), de l'au moins un paramètre de modèle qui est associé à l'au moins un gradient sélectionné,

g) calcul d'une deuxième précision du modèle client (CM1) issu de l'étape précédente à l'aide de l'au moins un ensemble de données de référence,

h) vérification que la deuxième précision se situe ou non au-dessous de la première précision, si c'est le cas, fixation de l'au moins un paramètre de modèle qui est associé à l'au moins un gradient sélectionné en tant qu'au moins un paramètre sensible et stockage dans la mémoire (MEM), et fourniture du modèle client (CM1) au serveur (S),

i) actualisation, par le serveur (S), du modèle global à l'aide du modèle client (CM1) fourni,

j) mise en fonctionnement, par le client (C1), du dispositif technique (TD1) avec le modèle client (CM1) et l'au moins un paramètre sensible issu de la mémoire (MEM).

2. Procédé selon la revendication précédente, dans lequel la deuxième précision est stockée dans la mémoire (MEM) du client (C1 à C3) respectif.

3. Procédé selon l'une des revendications précédentes, dans lequel la gamme de valeurs prédéfinie est fixée au moins par la distribution normale de plusieurs gradients dans plusieurs itérations du procédé.

4. Système client-serveur pour la mise en fonctionnement d'un dispositif technique (TD) avec un modèle basé sur l'intelligence artificielle par un client (C1 à C3) d'un système client-serveur avec un serveur (S), lequel fournit un modèle global basé sur un apprentissage fédéré, et au moins deux clients (C1 à C3), dans lequel chaque client (C1 à C3) comprend un processeur et une mémoire (MEM), et chaque client (C1 à C3) stocke un modèle client (CM1 à CM3) pour la mise en fonctionnement d'un dispositif technique (TD1) connecté, lequel modèle client (CM1 à CM3) comprend des paramètres de modèle sensibles et des paramètres de modèle non sensibles, le système étant conçu pour exécuter le procédé selon l'une des revendications précédentes.

5. Produit de programme informatique avec des instructions lisibles par machine stockées en son sein qui, lorsqu'elles sont exécutées par un système client-serveur, le système client-serveur comportant un serveur (S) et au moins deux clients (C1 à C3), et chaque client comprenant un processeur et une mémoire (MEM), amène le système client-serveur à exécuter le procédé selon l'une des revendications 1 à 3.

## FIG 1

## FIG 2

# FIG 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Multi-Task Federated Learning for Personalised Deep Neural Networks in Edge Computing. **JED MILLS et al.** ARXIV.ORG. CORNELL UNIVERSITY LIBRARY, 16 April 2021